# EUROPÄISCHE PATENTSCHRIFT

(11) **EP 1 264 721 B1**
(45) Veröffentlichungstag und Bekanntmachung des Hinweises auf die Patenterteilung: **16.08.2006**
(21) Anmeldenummer: 02010223.2
(22) Anmeldetag: 16.05.2002
(51) Int. Cl.: B60J 7/053, B60J 7/00, B60J 7/02

(54) **Fahrzeugdach mit einem verstellbaren Schliesselement**
Vehicle roof with a movable closing element
Toit de véhicule avec un élément de fermeture déplaçable

(30) Priorität: 05.06.2001 DE 10127116
(43) Veröffentlichungstag der Anmeldung: 11.12.2002
(73) Patentinhaber: Webasto Vehicle Systems International GmbH, 82131 Stockdorf (DE)
(72) Erfinder: Seifert, Wolfgang, 82110 Germering (DE)
(74) Vertreter: Wiese, Gerhard

(56) Entgegenhaltungen:
- DE-A- 3 308 065
- DE-A- 19 906 516
- US-A- 4 966 409

## Beschreibung

Die vorliegende Erfindung betrifft ein Fahrzeugdach mit einem verstellbaren Schließelement und einer Wasserrinne gemäß dem Oberbegriff von Anspruch 1.

Ein solches gattungsgemäßes Fahrzeugdach ist beispielsweise aus der DE 199 06 516 A1 bekannt, wobei die Dachöffnung in einer festen Dachfläche ausgebildet ist und an der vorderen Wange der Wasserrinne das obere Ende einer in Fahrzeugquerrichtung verlaufenden balgartig faltbaren Blende befestigt ist, deren unteres Ende an der nach vorn weisenden Kante des Fahrzeugfesthimmels angebracht ist. Die Blende dient dazu, den Spalt zwischen der Hinterkante des Schließelements, welches als Deckel ausgebildet ist, und dem hinteren Dachöffnungsrand zu verdecken. Beim Ausstellen der Deckelhinterkante wird durch eine entsprechende Mechanik die Wasserrinne mit ihrer vorderen Wange als Schwallwasserschutz über das Dachniveau angehoben, wobei die Blende entsprechend mitgenommen wird und ihre Ausdehnung in Dachhöhenrichtung vergrößert. Beim Absenken der Deckelhinterkante unter das Dachniveau wird die vordere Wange der Wasserrinne entsprechend mitabgesenkt und die Blende in Höhenrichtung entsprechend zusammengeschoben.

Es ist Aufgabe der vorliegenden Erfindung, ein Fahrzeugdach zu schaffen, bei welchem auf einfache Weise ein Einklemmschutz im Bereich des hinteren Endbereichs des Schließelements realisiert werden kann.

Diese Aufgabe wird erfindungsgemäß gelöst durch ein Fahrzeugdach, wie es in Anspruch 1 definiert ist. Bei dieser erfindungsgemäßen Lösung ist vorteilhaft, dass die bezüglich der Fahrtrichtung hintere Wange der Wasserrinne als Einklemmschutzblende für den hinteren Endbereich des Schließelements ausgebildet ist, wodurch auf einfache Weise ohne zusätzliche Komponenten ein solcher Einklemmschutz realisiert werden kann, wobei die erfindungsgemäße Lösung insbesondere für Fahrzeugdächer vorteilhaft ist, bei welchen im hinteren Endbereich des Schließelements kein Festhimmel vorgesehen ist.

Vorteilhafte Ausgestaltungen der Erfindung ergeben sich aus den Unteransprüchen.

Im folgenden wird die Erfindung anhand der beigefügten Zeichnungen beispielhaft näher erläutert. Dabei zeigen:
- FIG. 1: einen Längsschnitt im Bereich der Wasserrinne im hinteren Endbereich des vorderen Deckels eines öffnungsfähigen Fahrzeugdaches gemäß einer ersten Ausführungsform, wobei sich der vordere Dekkel in Schließstellung befindet;
- FIG. 2: eine Ansicht wie FIG. 1, wobei jedoch der vordere Deckel in einer Stellung gezeigt ist, in welcher die Deckelhinterkanfite abgesenkt ist;
- FIG. 3: eine Ansicht wie FIG. 1, wobei jedoch der vordere Deckel in einer Stellung gezeigt ist, in welcher die Deckelhinterkante nach oben ausgestellt ist;
- FIG. 4: eine Aufsicht auf die Wasserrinne von FIG. 1 bis 3;
- FIG. 5: schematisch einen Längsschnitt des gesamten Fahrzeugdaches, wobei der vordere Deckel in seiner Schließstellung gezeigt ist; und
- FIG. 6: eine Ansicht wie FIG. 5 wobei der vordere Deckel jedoch in einer Stellung gezeigt ist, in welcher er unter den hinteren Deckel geschoben ist.
- FIG. 7: eine Ansicht ähnlich zu FIG. 1 bis 3, wobei jedoch die Wasserrinne in einer abgewandelten Ausführungsform dargestellt ist und das Fahrzeugdach unter Weglassung des vorderen Deckels hauptsächlich im Bereich des hinteren Deckels gezeigt ist;
- FIG. 8: einen Schnitt in der Ebene der Linie VIII-VIII von FIG. 7, wobei jedoch das Ausgleichselement der Wasserrinne in einer gegenüber der Darstellung gemäß FIG. 7 abgewandelten Ausführungsform dargestellt ist;
- FIG. 9: einen Schnitt in der Ebene der Linie IX-IX von FIG. 7; und
- FIG. 10: einen Schnitt in der Ebene der Linie X-X von FIG. 9, wobei jedoch der Bereich der hinteren Wange der Wasserrinne nur schematisch dargestellt ist.

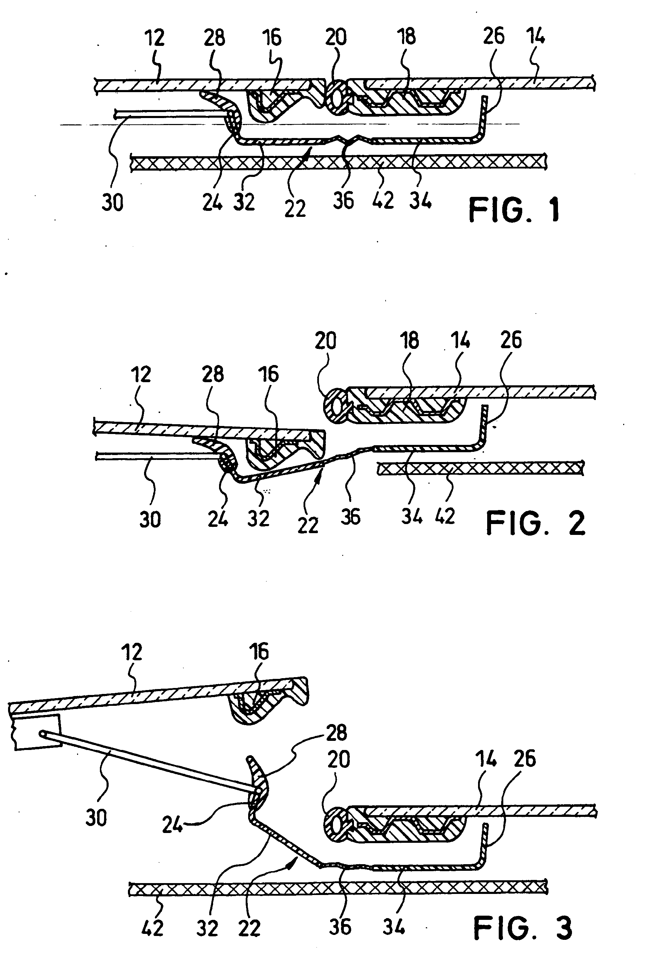

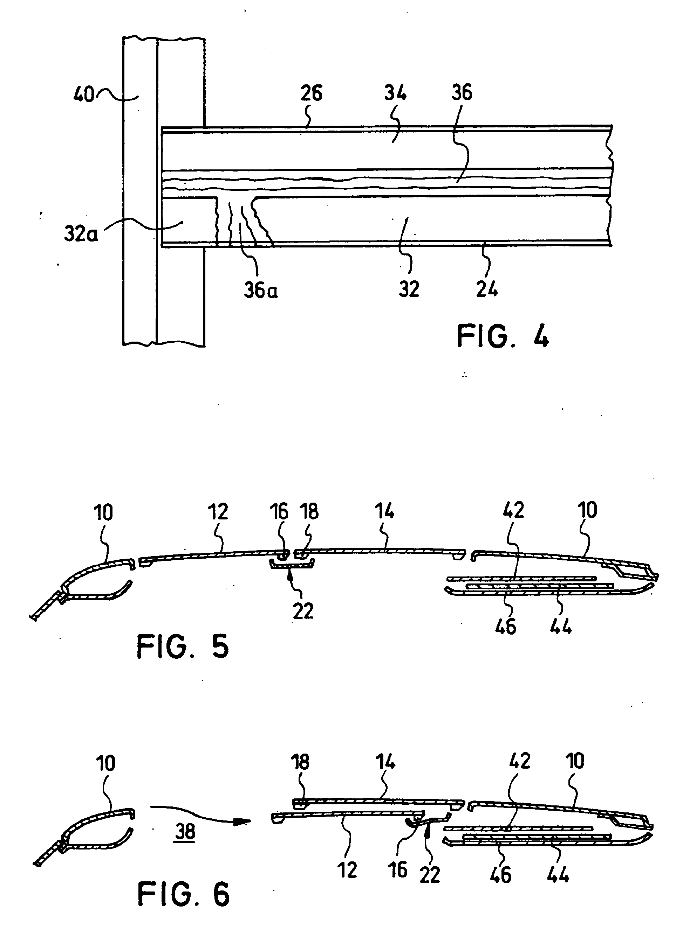

Gemäß FIG. 1 und 5 umfasst ein öffnungsfähiges Fahrzeugdach gemäß einer ersten Ausführungsform eine feste Dachhaut 10, welche eine Dachöffnung 38 aufweist, die in FIG. 5 von einem vorderen Deckel 12 und einem dahinter angeordneten hinteren Deckel 14 verschlossen wird, die beide als transparente Deckel, vorzugsweise als Glasdeckel, ausgebildet sind. Der vordere Deckel 12 ist in seinem hinteren Endbereich mit einer Verstärkung 16 versehen, während der hintere Deckel 14 in seinem vorderen Endbereich mit einer Umschäumung bzw. Verstärkung 18 versehen ist, welche an ihrem vorderen Ende ein Hohlkammerdichtungselement 20 zur Abdichtung des Stoßes zwischen dem vorderen Deckel 12 und dem hinteren Deckel 14 trägt. Die Verstärkungen 16 und 18 und das Dichtungselement 20 sind nicht-transparent ausgebildet.

Im Bereich unterhalb des Stoßes zwischen den beiden Deckeln 12 und 14 ist eine Wasserrinne 22 vorgesehen, welche in Dachquerrichtung verläuft und im Schnitt im wesentlichen U-förmig ausgebildet ist, wobei der Basisbereich bzw. der Grund der Wasserrinne 22 vorne und hinten von einer vorderen bzw. hinteren Wange 24 bzw. 26 begrenzt wird. Die vordere Wange 24 trägt an ihrer Oberseite eine Dichtungslippe 28, welche in der in den FIG. 1 und 5 gezeigten Schließstellung an der Unterseite des vorderen Deckels 12 anliegt. Ferner ist die vordere Wange 24 mit einem Ausstellhebel 30 verbunden, der seinerseits an dem vorderen Deckel 12 bzw. dessen Ausstellmechanik angreift.

Die Wasserrinne 22 umfasst im wesentlichen drei Bereiche: einen vorderen festen Wasserrinnenbereich (Wasserinnenabshnitt) 32, der die vordere Wange 24 und den vorderen Teil des Basisabschnitts umfasst, einen hinteren Wasserrinnenbereich (Wasserrinnenabschnitt) 34, der die hintere Wange 26 und einen hinteren Abschnitt des Basisabschnitts umfasst, sowie einen flexiblen Bereich 36, welcher wasserundurchlässig ist und den vorderen Wasserrinnenbereich 32 mit dem hinteren Wasserrinnenbereich 34 verbindet. Der flexible Bereich 36 erstreckt sich dabei in Dachquerrichtung, siehe auch FIG. 4, und kann beispielsweise balgähnlich ausgestaltet sein. Die Wasserrinne 22 ist so dimensioniert, dass sie den gesamten nichttransparenten Bereich im Bereich des Deckelstoßes, d.h. die Verstärkungen 16 und 18 und die Dichtung 20, zum Fahrzeuginnenraum hin verdeckt. Die Verstärkungen 16 und 18 sind jeweils möglichst nahe an dem jeweiligen Deckelende angeordnet, um die Ausdehnung des nichttransparenten Bereiches zu minimieren.

Der vordere Deckel 12 ist vorzugsweise als Schiebehebedeckel ausgebildet, d.h. er kann aus der Schließstellung wahlweise mit seiner Deckelhinterkante ausgestellt werden oder nach Absenken der Deckelhinterkante unter den hinteren Dekkel 14 geschoben werden, um eine vordere Dachöffnung 38 (siehe FIG. 6) freizulegen. Der hintere Deckel 14 ist vorzugsweise als Ausstelldeckel, d.h. mit ausstellbarer Hinterkante, oder als Spoilerdeckel ausgebildet, d.h. der Deckel kann mit ausgestellter Hinterkante nach hinten geschoben werden. Alternativ kann der hintere Deckel 14 jedoch auch als Festelement, d.h. nicht verstellbar, ausgebildet sein.

Die Wasserrinne 22 ist mit dem hinteren Wasserrinnenbereich 34 gemäß FIG. 4 in einer im wesentlich horizontal in Dachlängsrichtung verlaufenden Führungsschiene 40 geführt, so dass die Wasserrinne 22 mit dem vorderen Deckel 12 zusammen nach hinten unter den hinteren Deckel 14 geschoben werden kann, wie dies in FIG. 6 angedeutet ist.

Der flexible Bereich 36, der gemäß FIG. 4 etwa in der Mitte der Wasserrinne 32 angeordnet ist, hat die Funktion, ein Verschwenken des vorderen Wasserrinnenbereichs 32 bezüglich des hiflteren Wasserrinnenbereichs 34 zu ermöglichen. Bei der gezeigten Ausführungsform ist dabei, wie oben bereits erwähnt, der hintere Wasserrinnenbereich 34 in der Führungsschiene 40 geführt und dabei nichtschwenkbar ausgebildet, während der vordere Wasserrinnenbereich 32 mittels des flexiblen Bereichs 36 bezüglich des hinteren Wasserrinnenbereichs 34 nach oben bzw. nach unten schwenkbar ist.

Gemäß FIG. 5 beginnt das Öffnen des vorderen Deckels 12 damit, dass zwei Schiebehimmel 42 und 44, die in der in FIG. 1 gezeigten Schließstellung hintereinanderliegend unterhalb des vorderen Deckels 12 bzw. des hinteren Deckels 14 angeordnet sind, um die Dachöffnung bezüglich des Fahrzeuginnenraums abzudecken, nach hinten geschoben werden, wobei gemäß FIG. 5 in der Endstellung beide Schiebedeckel übereinanderliegend in einer Ablage 46 angeordnet sind. Sobald der vordere Schiebehimmel 42 hinter den flexiblen Bereich 36 der Wasserrinne 22 geschoben wurde, kann ein Absenken des mit der Verstärkung 16 versehenen hinteren Endbereichs des vorderen Deckels 12 erfolgen, wobei die Unterseite der Verstärkung 16 von oben zur Anlage an den vorderen Wasserrinnenbereich 32 gelangt und diesen mit nach unten drückt bzw. nach unten verschwenkt, wie dies in FIG. 2 dargestellt ist. Dabei kann der vordere Wasserrinnenbereich 32 unter das Niveau des vorderen Schiebehimmels 42 gedrückt werden. Ausgehend von der in FIG. 2 gezeigten Stellung kann dann der vordere Dekkel 12 in die in FIG. 6 gezeigte Stellung gebracht werden, in welcher er zusammen mit der Wasserrinne 22 nach hinten unter den hinteren Deckel 14 geschoben wurde.

Wenn dagegen der vordere Deckel 12 ausgehend von der in FIG. 1 gezeigten Schließstellung mit seiner Hinterkante ausgestellt werden soll, kann der vordere Schiebehimmel 42 grundsätzlich auch mindestens zum Teil geschlossen bleiben. Der Ausstellhebel 30 wird durch die Ausstellbewegung des vorderen Deckels 12 bzw. der Ausstellbewegung der entsprechenden Deckelmechanik dazu veranlasst, den vorderen Wasserrinnenbereich 32 ein Stück weit nach oben mitzunehmen, d.h. ein Stück weit auszustellen, wobei gemäß FIG. 3 die vordere Wange 24 über das Niveau des hinteren Deckels 14 angehoben wird. In dieser Stellung wirkt die Wasserrinne 22 als Schwallwasserschutz für Wasser, welches z.B. bei Bremsbewegungen von der Oberseite des hinteren Deckels 14 in die Dachöffnung gelangen könnte.

Wie aus FIG. 4 ersichtlich ist, kann sich der flexible Bereich 36 im seitlichen Randbereich mit einem Bereich 36a in Fahrtrichtung nach vorne erstrecken, um zu vermeiden, dass der vordere Wasserrinnenbereich 32 auch ganz am Rand verschwenkbar sein muss; vielmehr kann auf diese Weise ein Bereich 32a von der Schwenkbewegung ausgenommen bleiben.

Gemäß FIG. 1 bis 3 kann die hintere Wange 26 der Wasserrinne 22 bis zur Unterseite der hinteren Deckelscheibe 14 hochgezogen sein, um einen Schutz vor dem Einklemmen von Gegenständen und Körperteilen zwischen dem vorderen Deckel 12, insbesondere in dessen hinterem Endbereich, und dem hinteren Deckel 14 beim Zurückfahren des vorderen Deckels 12 zu realisieren. Die Ausführungsform der Wasserrinne gemäß den FIG. 1 bis 3 mit fester hinterer Wange 26, die als Blende und Einklemmschutz für den vorderen Deckel 12 wirkt, wobei vorzugsweise ein Spalt von weniger als 4 mm zwischen der Unterseite des hinteren Deckels 14 und der Oberkante der hinteren Wange 26 verbleibt, eignet sich vor allem für Fahrzeugdächer, bei welchen die Bewegungslinie der Wasserrinne 22 parallel zu der Unterseite des hinteren Deckels 14 verläuft und die hintere Verstärkung des hinteren Deckels 14 nicht überfahren werden muss.

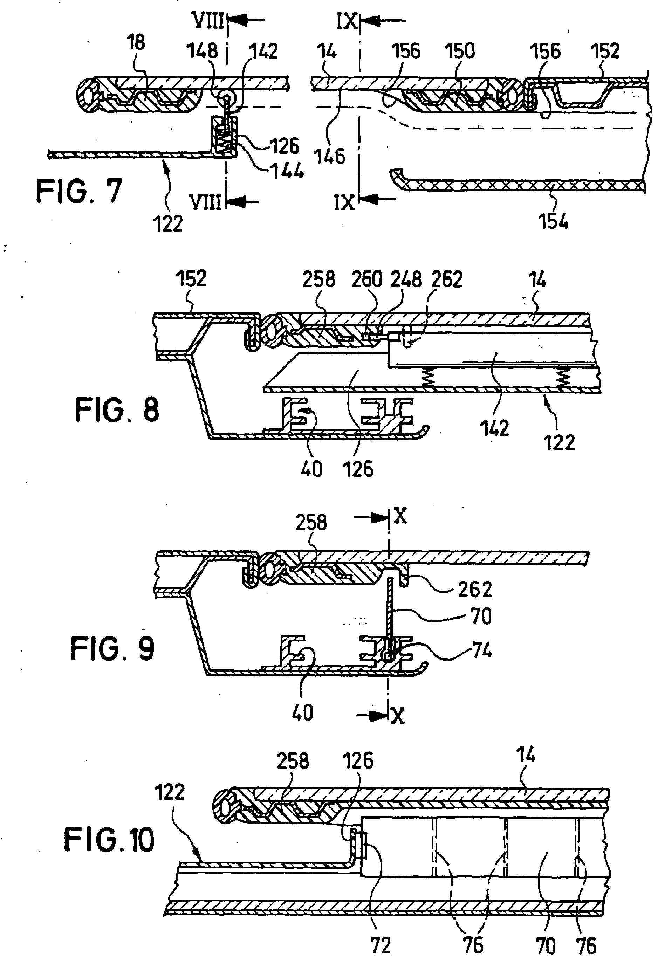

In den FIG. 7 bis 10 ist eine Ausführungsform der hinteren Wange 126 der Wasserrinne 122 gezeigt, bei welcher die hintere Wange 126 mit einem Ausgleichselement 142 versehen ist, welches eine Niveauveränderung zwischen der Unterseite des hinteren Deckels 14 und der Wasserrinne 122 aufgrund der Verschiebebewegung, der Wasserrinne 122 in Dachlängsrichtung ausgleichen kann. Zu diesem Zweck ist das Ausgleichselement 142 in Dachhöhenrichtung verstellbar. Das Ausgleichselement 142 ist als Blendenstreifen ausgebildet, der im wesentlichen senkrecht orientiert ist und in Dachquerrichtung verläuft. Das untere Ende des Ausgleichselements 142 ist in der hinteren Wange 126 der Wasserrinne 122 aufgenommen, die als doppellippige Konstruktion ausgebildet ist, in welche das Ausgleichselement 142 von oben eingesteckt ist. Am Boden der hinteren Wange 126 ist ein Federelement 144 vorgesehen, welches das Ausgleichselement 142 nach oben zur Unterseite 146 des hinteren Deckels 14 vorspannt. Bei der Ausführungsform des Ausgleichselements 142 gemäß FIG. 7 ist an der Oberseite des Ausgleichselements 142 jeweils im Randbereich eine Rolle 148 vorgesehen, welche von dem Federelement 144 zur Anlage an einer an der Unterseite 146 des hinteren Deckels 14 im seitlichen Randbereich vorgesehene Steuerbahn 156 gebracht wird. Durch die Kontur der Steuerbahn wird somit die vertikale Position des Ausgleichselements 142 in Abhängigkeit von der Verschiebestellung der Wasserrinne 122 gesteuert, um jederzeit eine möglichst vollständige Blenden- bzw. Einklemmschutzwirkung bezüglich des Spalts zwischen der Wasserrinne 122 und dem hinteren Deckel 14 zu realisieren. Statt einer Rolle 148 kann auch ein Gleiter (nicht gezeigt) verwendet werden, der dann entlang der Steuerbahn 156 gleitet.

In seinem hinteren Endbereich ist der hintere Deckel 14 mit einer hinteren Dekkelumschäumung bzw. -verstärkung 150 versehen, welche an eine feste Dachfläche 152 angrenzt. Unterhalb des Bereichs der hinteren Umschäumung 150 und der festen Dachfläche 152 ist in bekannter Weise ein Festhimmel 154 vorgesehen, wobei der Abstand so gewählt ist, dass die Wasserrinne 122 und gegebenenfalls der hintere Bereich des vorderen Deckels 12 unter die feste Dachfläche 152 geschoben werden kann. Falls das Fahrzeugdach mit den Schiebehimmeln 42, 44 gemäß FIG. 5 und 6 verstehen ist, müssen diese ebenfalls zwischen Festhimmel 154 (bzw. 46) und fester Dachfläche 152 aufnehmbar sein.

Im Bereich der hinteren Deckelumschäumung 150 des hinteren Deckels 14 und der festen Dachfläche 152 ist die Steuerbahn 156 für die Rolle 148 des Ausgleichselements 142 angedeutet. Die Rolle 148 wirkt im Zusammenspiel mit der Steuerbahn 156 als Steuerelement für die Verstellung des Ausgleichselements 142.

In FIG. 8 ist eine abgewandelte Ausführungsform der Steuerung des Ausgleichselements 142 dargestellt, wobei in diesem Fall statt einer Steuerbahn, an welcher eine Rolle oder ein Gleiter anliegt, ein im Bereich einer seitlichen Umschäumung 258 des hinteren Deckels 14 eingefräster Steuerschlitz 260 vorgesehen ist, dessen Öffnung zur Dachinnenseite weist und in den ein stiftartiges Steuerelement 248 eingreift, welches an dem seitlichen Rand des Ausgleichselements 142 vorgesehen ist. In dem Steuerschlitz 260 ist das Steuerelement 248 verschiebbar geführt, wodurch die Höhenverstellung des Ausgleichselements 142 in Abhängigkeit von der Schiebestellung der Wasserrinne 122 bzw. des vorderen Deckels 12 gesteuert wird.

In alternativer Ausgestaltung Kann der Steuerchlitz 260 statt in der seitlichen Umschäumung 258 auch in einer an der Unterseite des hinteren Deckels 14 vorgesehenen in Dachlängsrichtung verlaufenden Seiten- bzw. Innenblende 262 vorgesehen sein.

In FIG. 8 ist ferner zu erkennen, wie sich eine feste Dachfläche 152 seitlich des hinteren Deckels 14 erstreckt, die einen Teil der Fahrzeugkarosserie bildet und an welcher die Führungsschiene 40 zur Führung des vorderen Deckels 12 und der Wasserrinne 122 angebracht ist. Auch die feste Dachfläche 152 hinter dem hinteren Deckel 14 gemäß FIG. 7 wird üblicherweise von der Karosserie gebildet.

Aus FIG. 9 und 10 ist ersichtlich, dass hinter der Wasserrinne 122 in den beiden seitlichen Randbereichen des hinteren Deckels 14 jeweils eine Seitenblende 70 vorgesehen ist, welche vertikal orientiert ist und sich in Dachlängsrichtung erstreckt. Die Seitenblende 70 ist gemäß FIG. 10 mittels einer Verbindung 72 an der hinteren Wange 126 (die in FIG. 10 nur schematisch dargestellt ist) befestigt, wobei die Verbindung 72 beispielsweise als Clip-Befestigung ausgebildet sein kann. An ihrer Unterseite ist die Seitenblende 70 in der Führungsschiene 40 mittels eines Führungselements 74 in Dachlängsrichtung verschiebbar geführt. Falls die Länge der Führungsschiene 40 nicht ausreichen sollte, kann sich nach hinten (nicht dargestellte) zusätzliche Führung für das Führungselement 74 der Seitenblende 70 anschließen, welche beispielsweise als geschlitztes Rohr ausgebildet sein kann und mit einem bestimmten Krümmungsradius zur Dachinnenseite hin gekrümmt ist. In diesem Fall ist die Seitenblende 70 um die Dachhöhenrichtung biegeweich ausgebildet, so dass sie der nach innen gekrümmten Bahn der zusätzlichen Führung folgen kann. Eine solche biegeweiche Ausführung der Seitenblenden 70 kann beispielsweise dadurch erzielt werden, dass, wie in FIG. 10 mit gestrichelten Linien angedeutet, die Seitenblende 70 mit in Höhenrichtung verlaufenden Bereichen 76 mit verringerter Wandstärke versehen ist. Auf diese Weise kann die Seitenblende 70 scharnierartig ausgebildet sein.

Über die Verbindung 72, über welche die Seitenblende 70 fest mit der Wasserrinne 122 verbunden ist, wird die Seitenblende 70 bei einer Verschiebung des vorderen Deckels 12 (und damit der Wasserrinne 122) nach hinten ebenfalls nach hinten entlang der Führungsschiene 40 bzw. der zusätzlichen Führung verschoben. Falls im Zuge dieser Verschiebebewegung Niveauunterschiede zwischen der Unterseite des hinteren Deckels 14 und der Oberkante der Seitenblende 70 auftreten, was beispielsweise durch eine Krümmung des Deckels 14 in Dachlängsrichtung oder an der Deckelunterseite vorgesehene Verstärkungen, wie beispielsweise der hinteren Umschäumung 150, der Fall sein kann, ist es vorteilhaft, eine bereits in FIG. 8 gezeigte, sich von der Unterseite des hinteren Deckels 14 aus nach unten erstreckende Innenblende 262 vorzusehen, welche bezüglich der jeweiligen Seitenblende 70 innenliegend ausgebildet ist und deren unteres Ende das obere Ende der Seitenblende 70 überlappt. Auf diese Weise kann zwischen der Unterseite des hinteren Deckels 14 und der Oberkante der Seitenblende 70 ein gewisser Spalt verbleiben, der zum Ausgleich von Niveauunterschieden zur Verfügung steht.

Die Innenblende 262 kann beispielsweise auch doppellippig ausgeführt sein, wobei die Oberkante der Seitenblende 70 dann zwischen der Doppellippe verläuft. Dies erhöht die Sicherheit gegen in seitlicher Richtung ausgeübte Kräfte auf die Seitenblende 70 und erlaubt eine geringere Führungstiefe in Dachhöhenrichtung in der Führungsschiene 40.

Die Seitenblende 70 wirkt als Sichtschutz und als Schutz vor dem Einklemmen von Gegenständen und Körperteilen zwischen dem hinteren Deckel 14 und der Führungsschiene 40.

Das Ausgleichselement 142 kann statt wie gezeigt in Höhenrichtung verschiebbar zu sein, um eine in Dachquerrichtung verlaufende Achse drehbar sein, um Niveauunterschiede im Verlauf der Verschiebebewegung der Wasserrinne 122 in Dachlängsrichtung auszugleichen, wobei die in den FIG. 7 und 8 gezeigten Ausführungen der Steuerung der vertikalen Position des Ausgleichselements 142 analog realisiert werden können.

### Bezugszeichenliste

- 10: feste Dachhaut
- 12: vorderer Deckel
- 14: hinterer Deckel
- 16: Verstärkung von 12
- 18: Verstärkung von 14
- 20: Dichtungselement
- 22: Wasserrinne
- 24: vordere Wange von 22
- 26: hintere Wange von 22
- 28: Dichtungselement an 22
- 30: Ausstellhebel
- 32, 32a: vorderer Wasserrinnenabschnitt
- 34: hinterer Wasserrinnenabschnitt
- 36, 36a: flexibler Bereich von 22
- 38: Dachöffnung
- 40: Führungsschiene
- 70: Seitenblende
- 72: Verbindung
- 74: Führungselement von 70
- 76: scharnierartige Bereiche von 70
- 122: Wasserrinne
- 126: hintere Wange von 122
- 142: Ausgleichselement
- 144: Federelement
- 146: Unterseite von 14
- 148: Rolle
- 150: hintere Verstärkung von 14
- 152: feste Dachfläche
- 154: Festhimmel
- 156: Steuerbahn
- 248: stiftartiges Steuerelement
- 258: seitliche Umschäumung von 14
- 260: Steuerschlitz
- 262: Innenblende von 14

## Patentansprüche

1. Fahrzeugdach mit einem eine Dachöffnung (38) wahlweise verschließenden oder mindestens teilweise freigebenden verstellbaren Schließelement (12), und einer in Fahrzeugquerrichtung verlaufenden Wasserrinne (22, 122), die-unterhalb des bezüglich der Fahrtrichtung hinten liegenden Endbereichs (16) des Schließelements (12) angeordnet ist und U-förmig mit einer bezüglich der Fahrtrichtung vorderen Wange (24) und einer bezüglich der Fahrtrichtung hinteren Wange (26, 126) ausgebildet ist, um eindringendes Wasser aufzufangen und abzuleiten, **dadurch gekennzeichnet, dass** die bezüglich der Farhtrichtung hintere Wange (26, 126) der Wasserrinne (22, 122) so ausgebildet ist, dass sie als Blende und als Schutz vor dem Einklemmen von Gegenständen oder Körperteilen für den hinteren Endbereich (16) des Schließelements (12) wirkt.

2. Fahrzeugdach nach Anspruch 1, **dadurch gekennzeichnet, dass** die Wasserrinne (22, 122) beim Freigeben der Dachöffnung (38) zusammen mit dem Schließelement (12) nach hinten verschiebbar ist.

3. Fahrzeugdach nach Anspruch 2, **dadurch gekennzeichnet, dass** die Wasserrinne (22, 122) in Dachlängsrichtung in einer dachfesten Führungsschiene (40) geführt ist.

4. Fahrzeugdach nach Anspruch 2 oder 3, **dadurch gekennzeichnet, dass** die hintere Wange (126) der Wasserrinne (122) ein Ausgleichselement (142) umfasst, das in der Fahrzeughöhenrichtung verstellbar ist, um Veränderungen des Abstands zwischen dem Niveau der Dachunterseite (146) und dem Wasserrinnenniveau entlang des Verschiebewegs der Wasserrinne (122) auszugleichen.

5. Fahrzeugdach nach Anspruch 4, **dadurch gekennzeichnet, dass** die Höhenverstellung des Ausgleichselements (142) in Abhängigkeit von der Längs-Verschiebestellung der Wasserrinne (122) gesteuert ist.

6. Fahrzeugdach nach Anspruch 5, **dadurch gekennzeichnet, dass** die Höhenverstellung des Ausgleichselements (142) mittels einer dachfest ausgebildeten Steuerbahn (156, 260) erfolgt, mit welcher ein an dem Ausgleichselement vorgesehenes Steuerelement (148, 248) in Eingriff steht.

7. Fahrzeugdach nach Anspruch 6, **dadurch gekennzeichnet, dass** das Steuerelement als Gleiter oder Rolle (148) und die Steuerbahn als Anlagefläche (156) an der Dachunterseite (146) ausgebildet ist, an welcher das Steuerelement mittels einer von einem an dem Ausgleichselement (142) vorgesehenen Federelement (144) vermittelten Vorspannungskraft anliegt.

8. Fahrzeugdach nach Anspruch 6, **dadurch gekennzeichnet, dass** die Steuerbahn als Steuerschlitz (260) ausgebildet ist, in welchen das Steuerelement (248) eingreift.

9. Fahrzeugdach nach einem der Ansprüche 4 bis 8, **dadurch gekennzeichnet, dass** das Ausgleichselement (142) in Höhenrichtung verschiebbar ist.

10. Fahrzeugdach nach einem der vorhergehenden Ansprüche, **dadurch gekennzeichnet, dass** das Schließelement als transparenter Deckel (12) ausgebildet ist, der im hinteren Endbereich mit einer nicht-transparenten Verstärkung (16) versehen ist.

11. Fahrzeugdach nach Anspruch 10, **dadurch gekennzeichnet, dass** die Wasserrinne (22) die Verstärkung (16) untergreift.

12. Fahrzeugdach nach Anspruch 10 oder 11, **dadurch gekennzeichnet, dass** der Deckel (12) als Schiebe-Hebe-Dach-Deckel ausgebildet ist.

13. Fahrzeugdach nach einem der vorhergehenden Ansprüche, **dadurch gekennzeichnet, dass** die hintere Begrenzung der Dachöffnung (38) von einem transparenten zweiten Schließelement (14) gebildet wird, das in seinem vorderen Endbereich mit einer nicht-transparenten Verstärkung (18) versehen ist.

14. Fahrzeugdach nach Anspruch 13, **dadurch gekennzeichnet, dass** die Wasserrinne (22) die Verstärkung (18) des zweiten Schließelements (14) untergreift und die hintere Wange (26) der Wasserrinne (22) bis zur Unterseite des zweiten Schließelement (14) hochgezogen ist.

15. Fahrzeugdach nach Anspruch 13 oder 14, **dadurch gekennzeichnet, dass** es sich bei dem zweiten Schließelement (14) um ein Festelement handelt.

16. Fahrzeugdach nach Anspruch 13 oder 14, **dadurch gekennzeichnet, dass** es sich bei dem zweiten Schließelement (14) um einen ausstellbaren Deckel handelt.

17. Fahrzeugdach nach Anspruch 13, sofern auf Anspruch 8 rückbezogen, **dadurch gekennzeichnet, dass** der Steuerschlitz (260) in eine am seitlichen Rand des zweiten Schließelements (14) vorgesehene Umschäumung (258) eingefräst ist.

18. Fahrzeugdach nach Anspruch 13 , sofern auf Anspruch 8 rückbezogen, **dadurch gekennzeichnet, dass** der Steuerschlitz in eine an dem zweiten Schließelement (14) vorgesehene Innenblende (262) integriert ist.

19. Fahrzeugdach nach einem der vorhergehenden Ansprüche, **dadurch gekennzeichnet, dass** die Wasserrinne (22) mit einem quer zu der Fahrtrichtung verlaufenden flexiblen wasserundurchlässigen Bereich (36) versehen ist, um ein Verschwenken des vorderen Wasserrinnenbereichs (32) gegenüber dem hinteren Wasserrinnenbereich (34) zu ermöglichen

## Claims

1. Vehicle roof having a movable closing element (12) that optionally closes or at least partly opens a roof opening (38), and having a water channel (22, 122) which runs in the transverse direction of the vehicle and is arranged underneath the end region (16) of the closing element (12) which is located at the rear relative to the direction of travel, and is formed in a U shape with a front cheek (24) relative to the direction of travel and a rear cheek (26, 126) relative to the direction of travel, in order to catch and discharge penetrating water, **characterized in that** the rear cheek (26, 126) of the water channel (22, 122) relative to the direction of travel is formed in such a way that, for the rear end region (16) of the closing element (12), it acts as a shield and as a safeguard against objects or body parts being clamped in.

2. Vehicle roof according to Claim 1, **characterized in that**, when the roof opening (38) is opened, the water channel (22, 122) can be displaced rearwards together with the closing element (12).

3. Vehicle roof according to Claim 2, **characterized in that** the water channel (22, 122) is guided in the roof longitudinal direction in a guide rail (40) fixed to the roof.

4. Vehicle roof according to Claim 2 or 3, **characterized in that** the rear cheek (126) of the water channel (122) comprises a compensating element (142), which can be moved in the vehicle vertical direction in order to compensate for changes in the distance between the level of the underside (146) of the roof and the water channel level along the displacement travel of the water channel (122).

5. Vehicle roof according to Claim 4, **characterized in that** the vertical adjustment of the compensating element (142) is controlled as a function of the longitudinal displacement position of the water channel (122) .

6. Vehicle roof according to Claim 5, **characterized in that** the vertical adjustment of the compensating element (142) is carried out by means of a control track (156, 260) which is fixed to the roof and with which a control element (148, 248) provided on the compensating element is in engagement.

7. Vehicle roof according to Claim 6, **characterized in that** the control element is formed as a slider or roller (148) and the control track as a contact surface (156) on the underside (146) of the roof, on which the control element bears by means of a prestressing force imparted by a spring element (144) provided on the compensating element (142).

8. Vehicle roof according to Claim 6, **characterized in that** the control track is formed as a control slot (260) in which the control element (248) engages.

9. Vehicle roof according to one of Claims 4 to 8, **characterized in that** the compensating element (142) can be displaced in the vertical direction.

10. Vehicle roof according to one of the preceding claims, **characterized in that** the closing element is formed as a transparent panel (12) which is provided with a non-transparent reinforcement (16) in the rear end region.

11. Vehicle roof according to Claim 10, **characterised in that** the water channel (22) reaches under the reinforcement (16).

12. Vehicle roof according to Claim 10 or 11, **characterized in that** the panel (12) is formed as a tilt-and-slide roof panel.

13. Vehicle roof according to one of the preceding claims, **characterized in that** the rear limit of the roof opening (38) is formed by a transparent second closing element (14) which is provided with a non-transparent reinforcement (18) in its front end region.

14. Vehicle roof according to Claim 13, **characterized in that** the water channel (22) reaches under the reinforcement (18) of the second closing element (14) and the rear cheek (26) of the water channel (22) is drawn up as far as the underside of the second closing element (14).

15. Vehicle roof according to Claim 13 or 14, **characterized in that** the second closing element (14) is a fixed element.

16. Vehicle roof according to Claim 13 or 14, **characterized in that** the second closing element (14) is a panel that can be raised.

17. Vehicle roof according to Claim 13, provided that it refers back to Claim 8, **characterized in that** the control slot (260) is milled into peripheral foam (258) provided at the lateral edge of the second closing element (14).

18. Vehicle roof according to Claim 13, provided that it refers back to Claim 8, **characterized in that** the control slot is integrated into an internal shield (262) provided on the second closing element (14).

19. Vehicle roof according to one of the preceding claims, **characterized in that** the water channel (22) is provided with a flexible water-impermeable region (36) running transversely with respect to the direction of travel, in order to permit the front water channel region (32) to be pivoted with respect to the rear water channel region (34).

## Revendications

1. Toit de véhicule avec un élément de fermeture (12) fermant au choix une ouverture de toit (38) ou déplaçable au moins en partie libérable, et avec une gouttière (22, 122) s'étendant en direction transversale du véhicule, qui est disposée sous la zone terminale (16) de l'élément de fermeture (12), située à l'arrière par rapport au sens de la marche et qui est réalisée en forme de U avec une joue (24) avant par rapport au sens de la marche et une joue arrière (26, 126) par rapport au sens de la marche, pour récupérer et dévier l'eau susceptible de pénétrer, **caractérisé en ce que** la joue arrière (26, 126) par rapport au sens de la marche de la gouttière (22, 122) est réalisée de façon à ce qu'elle opère comme cache et comme protection contre le pincement d'objets ou de parties de corps ou membres pour la zone terminale (16) de l'élément de fermeture (12).

2. Toit de véhicule selon la revendication 1, **caractérisé en ce que** la gouttière (22, 122) peut être coulissable vers l'arrière conjointement avec l'élément de fermeture (12) lors de la libération de l'ouverture de toit (38).

3. Toit de véhicule selon la revendication 2, **caractérisé en ce que** la gouttière (22, 122) est guidée en direction longitudinale du toit dans un rail de guidage (40) fixe dans le toit.

4. Toit de véhicule selon la revendication 2 ou 3, **caractérisé en ce que** la joue arrière (126) de la gouttière (122) comprend un élément de compensation (142) qui peut être réglé en direction de la hauteur du véhicule, afin de compenser des modifications de l'écart entre le niveau de la face inférieure du toit (146) et le niveau de la gouttière le long du chemin de coulisse de la gouttière (122).

5. Toit de véhicule selon la revendication 4, **caractérisé en ce que** le réglage en hauteur de l'élément de compensation (142) est commandé en fonction de la position de coulissement longitudinal de la gouttière (122).

6. Toit de véhicule selon la revendication 5, **caractérisé en ce que** le réglage en hauteur de l'élément de compensation (142) s'effectue au moyen d'une bande de guidage (156, 260) réalisée de manière fixe dans le toit, avec laquelle un élément de guidage (148, 248) prévu sur l'élément de compensation (148, 248) est en prise.

7. Toit de véhicule selon la revendication 6, **caractérisé en ce que** l'élément de guidage est réalisé comme moyen glissant ou coulissant ou rouleau (148) et la bande de guidage comme surface d'appui (156) sur la face inférieure du toit (156), sur laquelle l'élément de guidage s'appuie au moyen d'une force de précontrainte produite par un élément à ressort (144) prévu sur l'élément de correction (142).

8. Toit de véhicule selon la revendication 6, **caractérisé en ce que** la bande de guidage est réalisée en tant que fente de commande (260) dans laquelle pénètre l'élément de guidage (248).

9. Toit de véhicule selon l'une quelconque des revendications 4 à 8, **caractérisé en ce que** l'élément de compensation (142) peut être coulissé en hauteur.

10. Toit de véhicule selon l'une quelconque des revendications précédentes, **caractérisé en ce que** l'élément de fermeture est réalisé comme couvercle transparent (12), qui est muni dans la zone terminale arrière d'un renfort non transparent (16).

11. Toit de véhicule selon la revendication 10, **caractérisé en ce que** la gouttière (22) pénètre le renfort (16) par en dessous.

12. Toit de véhicule selon la revendication 10 ou 11, **caractérisé en ce que** le couvercle (12) est réalisé comme couvercle de toit coulissant - ouvrant.

13. Toit de véhicule selon l'une quelconque des revendications précédentes, **caractérisé en ce que** la limitation arrière de l'ouverture de toit (38) est formée par un second élément de fermeture (14) transparent, qui est muni dans sa zone terminale avant d'un renfort non transparent (18).

14. Toit de véhicule selon la revendication 13, **caractérisé en ce que** la gouttière (22) pénètre par en dessous le renfort (18) du second élément de fermeture (14) et que la joue arrière (26) de la gouttière (22) est tirée vers le haut jusqu'à la face inférieure du second élément de fermeture (14).

15. Toit de véhicule selon la revendication 13 ou 14, **caractérisé en ce qu'**il s'agit pour le second élément de fermeture (14) d'un élément fixe ou solide.

16. Toit de véhicule selon la revendication 13 ou 14, **caractérisé en ce qu'**il s'agit pour le second élément de fermeture (14) d'un couvercle pouvant être extrait ou exposé.

17. Toit de véhicule selon la revendication 13, rapporté à la revendication 8, **caractérisé en ce que** la fente de guidage (260) est fraisée dans une formation enveloppante en mousse (258) prévue sur le bord latéral du second élément de fermeture (14).

18. Toit de véhicule selon la revendication 13, rattachée à la revendication 8, **caractérisé en ce que** la fente de guidage est intégrée dans un cache intérieur (262) prévu sur le second élément de fermeture (14).

19. Toit de véhicule selon l'une quelconque des revendications précédentes, **caractérisé en ce que** la gouttière (22) est munie d'une zone (36) flexible imperméable à l'eau s'étendant transversalement par rapport au sens de la marche, afin de permettre un basculement de la zone avant (32) de la gouttière par rapport à la zone arrière (34) de la gouttière.
